(19) Europäisches Patentamt
European Patent Office
Office européen des brevets

(11) **EP 4 160 746 A1**

(12) **EUROPEAN PATENT APPLICATION**
published in accordance with Art. 153(4) EPC

(43) Date of publication:
**05.04.2023 Bulletin 2023/14**

(21) Application number: **21813848.5**

(22) Date of filing: **10.05.2021**

(51) International Patent Classification (IPC):
*H01M 4/62* (2006.01)  *H01M 10/052* (2010.01)
*H01M 10/0562* (2010.01)  *H01B 1/06* (2006.01)
*C01F 17/36* (2020.01)

(52) Cooperative Patent Classification (CPC):
**C01F 17/36; H01B 1/06; H01M 4/62; H01M 10/052;
H01M 10/0562;** Y02E 60/10

(86) International application number:
**PCT/JP2021/017618**

(87) International publication number:
**WO 2021/241172 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2020 JP 2020093593**

(71) Applicant: **Panasonic Intellectual Property
Management Co., Ltd.
Osaka-shi, Osaka 540-6207 (JP)**

(72) Inventors:
• **KUBO, Takashi
Osaka-shi, Osaka 540-6207 (JP)**
• **MIYATAKE, Kazufumi
Osaka-shi, Osaka 540-6207 (JP)**
• **ASANO, Tetsuya
Osaka-shi, Osaka 540-6207 (JP)**
• **SAKAI, Akihiro
Osaka-shi, Osaka 540-6207 (JP)**

(74) Representative: **Grünecker Patent- und
Rechtsanwälte
PartG mbB
Leopoldstraße 4
80802 München (DE)**

(54) **SOLID ELECTROLYTE MATERIAL AND BATTERY IN WHICH SAME IS USED**

(57) The solid electrolyte material of the present disclosure includes Li, Sc, and Cl. In an X-ray diffraction pattern of the solid electrolyte material obtained using Cu-K$\alpha$ rays, there are at least two peaks in a diffraction angle 2$\theta$ range of 27° or more and 36° or less, and a peak with the highest intensity within the diffraction angle 2$\Theta$ range of 27° or more and 36° or less has a half value width of 0.5° or less.

FIG. 1

EP 4 160 746 A1

**Description**

Technical Field

The present disclosure relates to a solid electrolyte material and a battery using it.

Background Art

PTL 1 discloses a solid electrolyte material represented by a composition formula: $Li_{6-3\delta}Y_{1+\delta-\alpha}M_{\alpha}Cl_{6-x-y}Br_xI_y$ (M is at least one element selected from the group consisting of Al, Sc, Ga, and Bi, and $-1 < \delta < 1$, $0 < \alpha < 2$, $0 < 1 + \delta - a$, $0 \le x \le 6$, $0 \le y \le 6$, and $x + y \le 6$ are satisfied).

Citation List

Patent Literature

PTL 1: International Publication No. WO 2019/135320

Summary of Invention

Technical Problem

An object of the present disclosure is to provide a solid electrolyte material having a high lithium ion conductivity.

Solution to Problem

The solid electrolyte material of the present disclosure includes Li, Sc, and Cl, wherein in an X-ray diffraction pattern of the solid electrolyte material obtained using Cu-K$\alpha$ rays, there are at least two peaks in a diffraction angle 2$\Theta$ range of 27° or more and 36° or less, and a peak with the highest intensity within the diffraction angle 2$\Theta$ range of 27° or more and 36° or less has a half value width of 0.5° or less.

Advantageous Effects of Invention

The present disclosure provides a solid electrolyte material having a high lithium ion conductivity.

Brief Description of Drawings

[Fig. 1] Fig. 1 is a cross-sectional view of a battery 1000 according to a second embodiment.
[Fig. 2] Fig. 2 is a schematic view of a compression molding dies 300 used for evaluation of the ion conductivity of a solid electrolyte material.
[Fig. 3] Fig. 3 is a graph showing Cole-Cole plots obtained by impedance measurement of the solid electrolyte material of Example 1.
[Fig. 4] Fig. 4 is a graph showing X-ray diffraction patterns of the solid electrolyte materials of Examples 1 to 12 and Comparative Examples 1 to 3.
[Fig. 5] Fig. 5 is a graph showing the initial discharge characteristics of the battery of Example 1.

Description of Embodiments

Embodiments of the present disclosure will now be described with reference to the drawings.

(First embodiment)

The solid electrolyte material according to a first embodiment includes Li, Sc, and Cl, wherein

in an X-ray diffraction pattern of the solid electrolyte material obtained using Cu-K$\alpha$ rays,
there are at least two peaks in a diffraction angle 2$\theta$ range of 27° or more and 36° or less; and

a peak with the highest intensity within the diffraction angle 2θ range of 27° or more and 36° or less has a half value width of 0.5° or less.

The solid electrolyte material according to the first embodiment has a high lithium ion conductivity.

Here, the high lithium ion conductivity is, for example, $4.4 \times 10^{-4}$ S/cm or more. That is, the solid electrolyte material according to the first embodiment can have, for example, an ion conductivity of $4.4 \times 10^{-4}$ S/cm or more.

The X-ray diffraction pattern of the solid electrolyte material according to the first embodiment can be obtained by X-ray diffraction measurement by a θ-2θ method using Cu-Kα rays (wavelength: 1.5405 angstrom and 1.5444 angstrom, i.e., wavelength: 0.15405 nm and 0.15444 nm).

The half value width means the distance between two points having an intensity that is half of the maximum intensity of a peak.

In an X-ray diffraction pattern of the solid electrolyte material according to the first embodiment, the peak with the highest intensity within a diffraction angle 2θ range of 27° or more and 36° or less may have a half value width of larger than 0° and 0.5° or less. The half value width may be 0.15° or more and 0.42 or less.

The upper limit and lower limit of the half value width can be provided by an arbitrary combination selected from numerical values of 0.15, 0.16, 0.17, 0.18, 0.19, 0.21, 0.22, 0.25, and 0.5.

In the solid electrolyte material according to the first embodiment, an X-ray diffraction pattern of the solid electrolyte material obtained using Cu-Kα rays may include at least one peak in a diffraction angle 2θ range of 13° or more and 18° or less and at least one peak in a diffraction angle 2θ range of 45° or more and 52° or less. The peak with the highest intensity within the diffraction angle 2θ range of 13° or more and 18° or less may have a half value width of 0.5° or less.

The solid electrolyte material according to the first embodiment can be used for obtaining a battery having excellent charge and discharge characteristics. An example of the battery is an all solid state battery. The all solid state battery may be primary battery or a secondary battery.

Desirably, the solid electrolyte material according to the first embodiment essentially does not contain sulfur. The phrase "the solid electrolyte material according to the first embodiment essentially does not contain sulfur" means the solid electrolyte material does not contain sulfur as the constituent element excluding sulfur inevitably mixed as impurities. In this case, the amount of the sulfur mixed as impurities in the solid electrolyte material is, for example, 1 mol% or less. The solid electrolyte material according to the first embodiment preferably does not contain sulfur. A solid electrolyte material not containing sulfur does not generate hydrogen sulfide, even if it is exposed to the atmosphere, and is therefore excellent in safety. The sulfide solid electrolyte disclosed in PTL 1 generates hydrogen sulfide when exposed to the atmosphere.

The solid electrolyte material according to the first embodiment may consist essentially of Li, Sc, and Cl. Here, the phrase "the solid electrolyte material according to the first embodiment consists essentially of Li, Sc, and Cl" means that the molar proportion (i.e., molar fraction) of the sum of the amounts of Li, Sc, and Cl to the sum of the amounts of all elements constituting the solid electrolyte material according to the first embodiment is 90% or more. As an example, the molar proportion may be 95% or more. The solid electrolyte material according to the first embodiment may consist of Li, Sc, and Cl only.

The solid electrolyte material according to the first embodiment may include Y. The solid electrolyte material according to the first embodiment may consist essentially of Li, Y, Sc, and Cl. Here, the phrase "the solid electrolyte material according to the first embodiment consists essentially of Li, Y, Sc, and Cl" means that the molar proportion (i.e., molar fraction) of the sum of the amounts of Li, Y, Sc, and Cl to the sum of the amounts of all elements constituting the solid electrolyte material according to the first embodiment is 90% or more. As an example, the molar proportion may be 95% or more. The solid electrolyte material according to the first embodiment may consist of Li, Y, Sc, and Cl only.

The solid electrolyte material according to the first embodiment may be a material represented by the following composition formula (1):

$$Li_{6-3b}(Y_{1-a}SC_a)_bCl_6 \qquad (1).$$

Here, the following two mathematical expressions are satisfied:

$$0.3 \leq a \leq 1;$$

and

$$0.7 \leq b \leq 1.2.$$

The material represented by the composition formula (1) has a high ion conductivity.

In order to enhance the ion conductivity of the solid electrolyte material, in the composition formula (1), a mathematical expression: $0.35 \leq a \leq 1$ may be satisfied. In order to further enhance the ion conductivity of the solid electrolyte material, a mathematical expression: $0.7 \leq a \leq 1$ may be satisfied.

In order to enhance the ion conductivity of the solid electrolyte material, in the composition formula (1), a mathematical expression: $0.9 \leq b \leq 1.2$ may be satisfied.

The shape of the solid electrolyte material according to the first embodiment is not limited. Examples of the shape are needle, spherical, and oval spherical shapes. The solid electrolyte material according to the first embodiment may be, for example, a particle. The solid electrolyte material according to the first embodiment may be formed so as to have a pellet or planar shape.

When the shape of the solid electrolyte material according to the first embodiment is, for example, a particulate shape (e.g., spherical), the solid electrolyte material may have a median diameter of 0.1 $\mu$m or more and 100 $\mu$m or less. The median diameter means the particle diameter at which the accumulated volume in a volume-based particle size distribution is equal to 50%. The volume-based particle size distribution is measured with, for example, a laser diffraction measurement apparatus or an image analyzer.

The solid electrolyte material according to the first embodiment may have a median diameter of 0.5 $\mu$m or more and 10 $\mu$m or less. Consequently, the solid electrolyte material according to the first embodiment has a higher ion conductivity. Furthermore, the solid electrolyte material according to the first embodiment and other materials, such as an active material, can be well dispersed.

The solid electrolyte material according to the first embodiment is manufactured by, for example, the following method.

Raw material powders are provided so as to give a target composition and are mixed. The raw material powders may be, for example, halides.

As an example, when the target composition is $Li_3Y_{0.7}Sc_{0.3}Cl_6$, a LiCl raw material powder, an $YCl_3$ raw material powder, and a $ScCl_3$ raw material powder are mixed such that the LiCl : $YCl_3$ : $ScCl_3$ molar ratio is about 3 : 0.7 : 0.3. The raw material powders may be mixed at a molar ratio adjusted in advance so as to offset a composition change that may occur in the synthesis process.

A mixture of the raw material powders is heat-treated in an inert gas atmosphere or in a vacuum to obtain a reaction product. Alternatively, a mixture of the raw material powders is mechanochemically reacted with each other in a mixer, such as a planetary ball mill, i.e., by a mechanochemical method to obtain a reaction product, and the resulting reaction product may be heat-treated in an inert gas atmosphere or in a vacuum. The inert gas atmosphere is, for example, an argon atmosphere or a nitrogen atmosphere.

The solid electrolyte material according to the first embodiment is obtained by these methods.

(Second embodiment)

A second embodiment will now be described. The matters described in the first embodiment may be appropriately omitted.

In the second embodiment, an electrochemical device using the solid electrolyte material according to the first embodiment is described. As an example of the electrochemical device according to the second embodiment, a battery will now be described.

The battery according to the second embodiment includes a positive electrode, an electrolyte layer, and a negative electrode. The electrolyte layer is disposed between the positive electrode and the negative electrode. At least one selected from the group consisting of the positive electrode, the electrolyte layer, and the negative electrode contains the solid electrolyte material according to the first embodiment. The battery according to the second embodiment contains the solid electrolyte material according to the first embodiment and therefore has excellent charge and discharge characteristics.

The battery according to the second embodiment may be an all solid state battery.

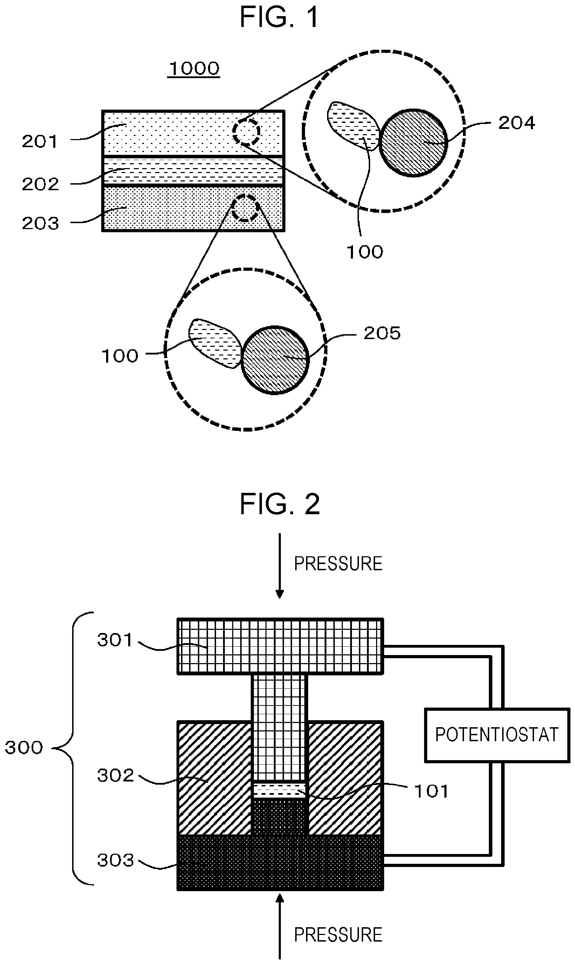

Fig. 1 shows a cross-sectional view of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 contains a positive electrode active material particle 204 and a solid electrolyte particle 100.

The electrolyte layer 202 contains an electrolyte material. The electrolyte material is, for example, a solid electrolyte material.

The negative electrode 203 contains a negative electrode active material particle 205 and a solid electrolyte particle 100.

The solid electrolyte particle 100 is a particle consisting of the solid electrolyte material according to the first embodiment or a particle containing the solid electrolyte material according to the first embodiment as a main component. The particle containing the solid electrolyte material according to the first embodiment as a main component means a particle in which the most abundant component in terms of mass ratio is the solid electrolyte material according to the first embodiment. The solid electrolyte particle 100 may be a particle consisting of the solid electrolyte material according to the first embodiment.

The positive electrode 201 contains a material that can occlude and release metal ions such as lithium ions. The material is, for example, a positive electrode active material (for example, the positive electrode active material particle 204).

Examples of the positive electrode active material are a lithium-containing transition metal oxide, a transition metal fluoride, a polyanionic material, a fluorinated polyanionic material, a transition metal sulfide, a transition metal oxyfluoride, a transition metal oxysulfide, and a transition metal oxynitride. Examples of the lithium-containing transition metal oxide are $Li(Ni,Co,Mn)O_2$, $Li(Ni,Co,Al)O_2$, and $LiCoO_2$.

In the present disclosure, "(A,B,C)" means "at least one selected from the group consisting of A, B, and C".

The positive electrode active material particle 204 may have a median diameter of 0.1 $\mu$m or more and 100 $\mu$m or less. When the positive electrode active material particle 204 has a median diameter of 0.1 $\mu$m or more, the positive electrode active material particle 204 and the solid electrolyte particle 100 can be well dispersed in the positive electrode 201. Consequently, the charge and discharge characteristics of the battery are improved. When the positive electrode active material particle 204 has a median diameter of 100 $\mu$m or less, the lithium diffusion speed in the positive electrode active material particle 204 is increased. Consequently, the battery can be operated at a high output.

The positive electrode active material particle 204 may have a median diameter larger than that of the solid electrolyte particle 100. Consequently, the positive electrode active material particle 204 and the solid electrolyte particle 100 can be well dispersed.

In order to increase the energy density and output of the battery, in the positive electrode 201, the ratio of the volume of the positive electrode active material particle 204 to the sum of the volumes of the positive electrode active material particle 204 and the solid electrolyte particle 100 may be 0.30 or more and 0.95 or less.

In order to increase the energy density and output of the battery, the positive electrode 201 may have a thickness of 10 $\mu$m or more and 500 $\mu$m or less.

The electrolyte layer 202 contains an electrolyte material. The electrolyte material is, for example, a solid electrolyte material. The electrolyte layer 202 may be a solid electrolyte layer.

The electrolyte layer 202 may contain the solid electrolyte material according to the first embodiment. The electrolyte layer 202 may be constituted of only the solid electrolyte material according to the first embodiment. Alternatively, the electrolyte layer 202 may be constituted of only a solid electrolyte material that is different from the solid electrolyte material according to the first embodiment.

Examples of the solid electrolyte material that is different from the solid electrolyte material according to the first embodiment are $Li_2MgX'_4$, $Li_2FeX'_4$, $Li(Al,Ga,In)X'_4$, $Li_3(Al,Ga,In)X'_6$, and LiI. Here, X' is at least one element selected from the group consisting of F, Cl, Br, and I.

Hereinafter, the solid electrolyte material according to the first embodiment is called a first solid electrolyte material. The solid electrolyte material that is different from the solid electrolyte material according to the first embodiment is called a second solid electrolyte material.

The electrolyte layer 202 may contain not only the first solid electrolyte material but also the second solid electrolyte material. The first solid electrolyte material and the second solid electrolyte material may be uniformly dispersed in the electrolyte layer 202. A layer made of the first solid electrolyte material and a layer made of the second solid electrolyte material may be stacked along the stacking direction of the battery 1000.

The electrolyte layer 202 may have a thickness of 1 $\mu$m or more and 1000 $\mu$m or less. When the electrolyte layer 202 has a thickness of 1 $\mu$m or more, short-circuiting hardly occurs between the positive electrode 201 and the negative electrode 203. When the electrolyte layer 202 has a thickness of 1000 $\mu$m or less, the battery can be operated at a high output.

The negative electrode 203 contains a material that can occlude and release metal ions such as lithium ions. The material is, for example, a negative electrode active material (for example, the negative electrode active material particle 205).

Examples of the negative electrode active material are a metal material, a carbon material, an oxide, a nitride, a tin compound, and a silicon compound. The metal material may be a single metal or an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of capacity density, suitable examples of the negative electrode active material are silicon (Si), tin (Sn), a silicon compound, and a tin compound.

The negative electrode active material particle 205 may have a median diameter of 0.1 $\mu$m or more and 100 $\mu$m or less. When the negative electrode active material particle 205 has a median diameter of 0.1 $\mu$m or more, the

negative electrode active material particle 205 and the solid electrolyte particle 100 can be well dispersed in the negative electrode 203. Consequently, the charge and discharge characteristics of the battery are improved. When the negative electrode active material particle 205 has a median diameter of 100 $\mu$m or less, the lithium diffusion speed in the negative electrode active material particle 205 is improved. Consequently, the battery can be operated at a high output.

The negative electrode active material particle 205 may have a median diameter larger than that of the solid electrolyte particle 100. Consequently, the negative electrode active material particle 205 and the solid electrolyte particle 100 can be well dispersed.

In order to increase the energy density and output of the battery, in the negative electrode 203, the ratio of the volume of the negative electrode active material particle 205 to the sum of the volumes of the negative electrode active material particle 205 and the solid electrolyte particle 100 may be 0.30 or more and 0.95 or less.

In order to increase the energy density and output of the battery, the negative electrode 203 may have a thickness of 10 $\mu$m or more and 500 $\mu$m or less.

At least one selected from the group consisting of the positive electrode 201, the electrolyte layer 202, and the negative electrode 203 may contain the second solid electrolyte material for the purpose of enhancing the ion conductivity, chemical stability, and electrochemical stability.

As described above, the second solid electrolyte material may be a halide solid electrolyte.

Examples of the halide solid electrolyte are $Li_2MgX'_4$, $Li_2FeX'_4$, $Li(Al,Ga,In)X'_4$, $Li_3(Al,Ga,In)X'_6$, and LiI. Here, X' is at least one element selected from the group consisting of F, Cl, Br, and I.

Other examples of the halide solid electrolyte are compounds represented by $Li_pMe_qY_rZ_6$. Here, p + m'q + 3r = 6 and r > 0 are satisfied. Me is at least one element selected from the group consisting of metal elements other than Li and Y and metalloid elements. Z is at least one selected from the group consisting of F, Cl, Br, and I. The value of m' represents the valence of Me. The "metalloid elements" are B, Si, Ge, As, Sb, and Te. The "metal elements" are all elements in groups 1 to 12 of the periodic table (however, excluding hydrogen) and all elements in groups 13 to 16 of the periodic table (however, excluding B, Si, Ge, As, Sb, Te, C, N, P, O, S, and Se). In order to enhance the ion conductivity of the halide solid electrolyte, Me may at least one element selected from the group consisting of Mg, Ca, Sr, Ba, Zn, Sc, Al, Ga, Bi, Zr, Hf, Ti, Sn, Ta, and Nb.

The second solid electrolyte material may a sulfide solid electrolyte.

Examples of the sulfide solid electrolyte are $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$.

The second solid electrolyte material may be an oxide solid electrolyte.

Examples of the oxide solid electrolyte are:

(i) an NASICON-type solid electrolyte, such as $LiTi_2(PO_4)_3$ or its element substitute;
(ii) a perovskite-type solid electrolyte, such as $(LaLi)TiO_3$;
(iii) an LISICON-type solid electrolyte, such as $Li_{14}ZnGe_4O_{16}$, $Li_4SiO_4$, $LiGeO_4$, or its element substitute;
(iv) a garnet-type solid electrolyte, such as $Li_7La_3Zr_2O_{12}$ or its element substitute; and
(v) $Li_3PO_4$ or its N-substitute.

The second solid electrolyte material may be an organic polymer solid electrolyte.

Examples of the organic polymer solid electrolyte are a polymer compound and a compound of a lithium salt. The polymer compound may have an ethylene oxide structure. A polymer compound having an ethylene oxide structure can contain a large amount of a lithium salt and can therefore further enhance the ion conductivity.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may contain a nonaqueous electrolyte liquid, a gel electrolyte, or an ionic liquid for the purpose of facilitating the transfer of lithium ions and improving the output characteristics of the battery.

The nonaqueous electrolyte liquid includes a nonaqueous solvent and a lithium salt dissolved in the nonaqueous solvent. Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is $\gamma$-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate. One nonaqueous solvent selected from these solvents may be used alone. Alternatively, a mixture of two or more nonaqueous solvents selected from these solvents may be used.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used. The concentration of the lithium salt is, for example, 0.5 mol/L or more and 2 mol/L or less.

As the gel electrolyte, a polymer material impregnated with a nonaqueous electrolyte liquid can be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:

(i) an aliphatic chain quaternary salt, such as tetraalkylammonium and tetraalkylphosphonium;
(ii) an alicyclic ammonium, such as pyrrolidiniums, morpholiniums, imidazoliniums, tetrahydropyrimidiniums, piperaziniums, and piperidiniums; and
(iii) a nitrogen-containing heterocyclic aromatic cation, such as pyridiniums and imidazoliums.

Examples of the anion included in the ionic liquid are $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may contain a binder for the purpose of improving the adhesion between individual particles.

Examples of the binder are polyvinylidene fluoride, polytetrafluoroethylene, polyethylene, polypropylene, an aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of such the binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from these materials may be used as the binder.

At least one selected from the group consisting of the positive electrode 201 and the negative electrode 203 may contain a conductive assistant for the purpose of enhancing the electron conductivity.

Examples of the conductive assistant are:

(i) graphites, such as natural graphite and artificial graphite;
(ii) carbon blacks, such as acetylene black and Ketjen black;
(iii) conductive fibers, such as carbon fibers and metal fibers;
(iv) carbon fluoride;
(v) metal powders, such as aluminum;
(vi) conductive whiskers, such as zinc oxide and potassium titanate;
(vii) a conductive metal oxide, such as titanium oxide; and
(viii) a conductive polymer compound, such as polyaniline, polypyrrole, and polythiophene. In order to reduce the cost, the conductive assistant of the above (i) or (ii) may be used.

Examples of the shape of the battery according to the second embodiment are a coin type, a cylindrical type, a square type, a sheet type, a button type, a flat type, and a stack type.

EXAMPLES

(Examples)

The present disclosure will now be described in more detail with reference to Examples and Comparative Examples.

<Example 1>

(Production of solid electrolyte material)

LiCl, $YCl_3$, and $ScCl_3$ were provided as raw material powders in an argon atmosphere having a dew point of -60°C or less (hereinafter, referred to as "dry argon atmosphere") at a LiCl : YCl$_3$ : ScCl$_3$ molar ratio of 3 : 0.7 : 0.3. These raw material were pulverized and mixed in a mortar. The resulting mixture was put in an alumina crucible and was heat-treated at 600°C for 60 minutes in a dry argon atmosphere. The resulting heat treatment product was pulverized in an agate mortar. Thus, a solid electrolyte material of Example 1 was obtained. The solid electrolyte material of Example 1 had a composition represented by Li$_3$Y$_{0.7}$Sc$_{0.3}$Cl$_6$.

The contents of Li, Y, and Sc in the solid electrolyte material of Example 1 were measured with a high-frequency inductively coupled plasma emission spectrometer (manufactured by Thermo Fisher Scientific, Inc., iCAP7400) by high-frequency inductively coupled plasma emission spectrometry. The Li : Y : Sc molar ratio was calculated based on the contents of Li, Y, and Sc obtained from these measurement results. As a result, the solid electrolyte material of Example 1 had a Li : Y : Sc molar ratio of 3 : 0.7 : 0.3 that is the same as the molar ratio in the raw material powders.

(Evaluation of ion conductivity)

Fig. 2 is a schematic view showing a compression molding dies 300 used for evaluation of the ion conductivity of a solid electrolyte material.

The compression molding dies 300 included a punch upper part 301, a die 302, and a punch lower part 303. The punch upper part 301 and the punch lower part 303 were both made of electron-conductive stainless steel. The die 302 was made of insulating polycarbonate.

The ion conductivity of the solid electrolyte material of Example 1 was measured using the compression molding dies 300 shown in Fig. 2 by the following method.

The powder of the solid electrolyte material of Example 1 (i.e., the powder 101 of the solid electrolyte material in Fig. 2) was filled in the compression molding dies 300 in a dry atmosphere having a dew point of -30°C or less. A pressure of 300 MPa was applied to the solid electrolyte material of Example 1 inside the compression molding dies 300 using the punch upper part 301 and the punch lower part 303.

While applying the pressure, the punch upper part 301 and the punch lower part 303 were connected to a potentiostat (manufactured by Princeton Applied Research, VersaSTAT4) loaded with a frequency response analyzer. The punch upper part 301 was connected to the working electrode and the potential measurement terminal. The punch lower part 303 was connected to the counter electrode and the reference electrode. The impedance of the solid electrolyte material of Example 1 was measured by an electrochemical impedance measurement method at room temperature.

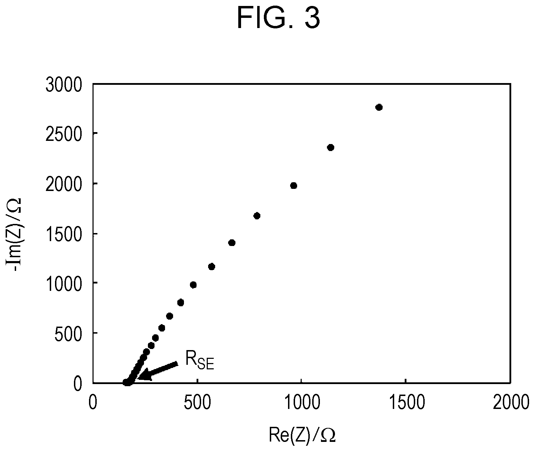

Fig. 3 is a graph showing Cole-Cole plots obtained by impedance measurement of the solid electrolyte material of Example 1.

In Fig. 3, the real value of impedance at the measurement point where the absolute value of the phase of the complex impedance was the smallest was regarded as the resistance value of the solid electrolyte material of Example 1 to ion conduction. Regarding the real value, see the arrow R$_{SE}$ shown in Fig. 3. The ion conductivity was calculated using the resistance value based on the following mathematical expression (2):

$$\sigma = (R_{SE} \times S/t)^{-1} \quad (2).$$

Here, $\sigma$ represents ion conductivity; S represents the contact area of a solid electrolyte material with the punch upper part 301 (equal to the cross-sectional area of the hollow part of the die 302 in Fig. 2); R$_{SE}$ represents the resistance value of the solid electrolyte material in impedance measurement; and t represents the thickness of the solid electrolyte material (i.e., in Fig. 2, the thickness of the layer formed from the powder 101 of the solid electrolyte material).

The ion conductivity of the solid electrolyte material of Example 1 measured at 22°C was $4.4 \times 10^{-4}$ S/cm.

(X-ray diffraction measurement)

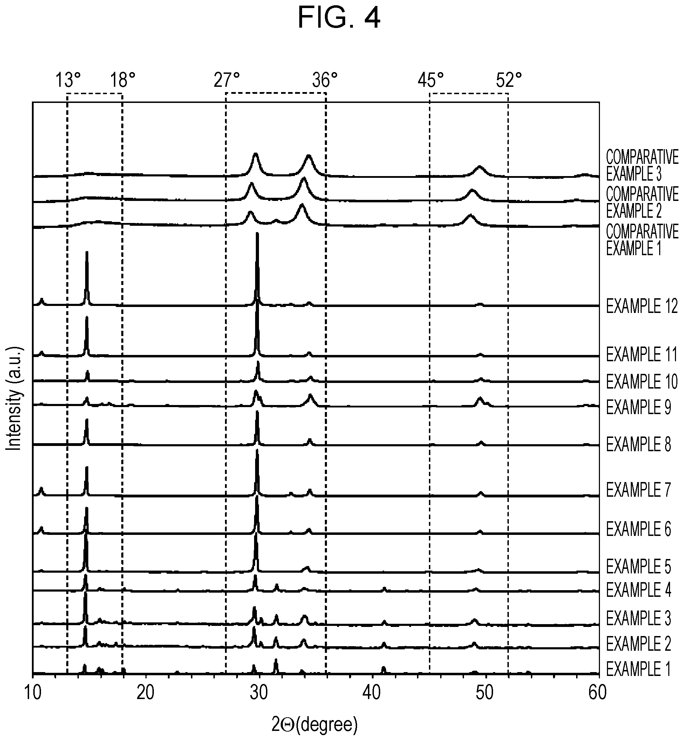

Fig. 4 is a graph showing an X-ray diffraction pattern of the solid electrolyte material of Example 1. The X-ray diffraction pattern was measured as follows.

The X-ray diffraction pattern of the solid electrolyte material of Example 1 was measured in a dry environment having a dew point of -50°C or less with an X-ray diffractometer (manufactured by RIGAKU Corporation, MiniFlex 600). As the X-ray source, Cu-K$\alpha$ rays (wavelength: 1.5405 angstrom and 1.5444 angstrom) were used. The X-ray diffraction pattern was measured by a $\theta$-2$\theta$ method.

In the resulting X-ray diffraction pattern, the half value width of a peak with the highest intensity within a diffraction angle 2$\theta$ range of 27° or more and 36° or less was measured. As a result, the half value width was 0.21°.

(Production of battery)

The solid electrolyte material of Example 1 and LiCoO$_2$ as an active material were provided at a volume ratio of 30 : 70 in the dry argon atmosphere. These materials were mixed in an agate mortar. Thus, a positive electrode mixture was obtained.

The solid electrolyte material of Example 1 (100 mg), the positive electrode mixture (10 mg), and an aluminum powder (14.7 mg) were stacked in this order in an insulating tube. A pressure of 300 MPa was applied to the resulting stack to form an electrolyte layer and a first electrode. The electrolyte layer had a thickness of 500 $\mu$m.

Subsequently, metal In (thickness: 200 $\mu$m) was stacked on the electrolyte layer. A pressure of 80 MPa was applied to this stack to form a second electrode. The first electrode was a positive electrode, and the second electrode was a negative electrode.

Subsequently, a current collector made of stainless steel was disposed to the first electrode and the second electrode, and a current collecting lead was attached to the current collector.

Finally, the inside of the insulating tube was isolated from the outside atmosphere using an insulating ferrule to seal the inside of the tube. Thus, a battery of Example 1 was obtained.

(Charge and discharge test)

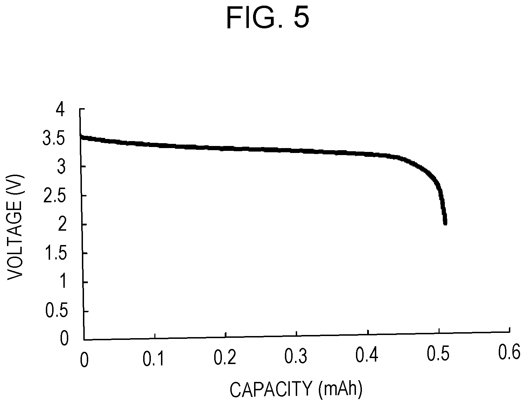

Fig. 5 is a graph showing the initial discharge characteristics of the battery of Example 1. The charge and discharge test was performed as follows.

The battery of Example 1 was placed in a thermostat maintained at 25°C.

The battery of Example 1 was charged at a current value giving 0.05 C rate (20 hour rate) with respect to the theoretical capacity of the battery until the voltage reached 3.7 V.

Subsequently, the battery of Example 1 was discharged at a current value giving 0.05 C rate until the voltage reached 1.9 V.

As the results of the charge and discharge test, the battery of Example 1 had an initial discharge capacity of 0.51 mAh.

<Examples 2 to 12>

(Production of solid electrolyte material)

In Examples 2 to 12, LiCl, YCl$_3$, and ScCl$_3$ were provided as raw material powders at a LiCl : YCl$_3$ : ScCl$_3$ molar ratio of (6 - 3b) : (1 - a)b : ab. Solid electrolyte materials of Examples 2 to 12 were obtained as in Example 1 except the above matters. The values of "a" and "b" are shown in Table 1.

(Evaluation of ion conductivity)

The ion conductivities of solid electrolyte materials of Examples 2 to 12 were measured as in Example 1. The measurement results are shown in Table 1.

(X-ray diffraction measurement)

The X-ray diffraction patterns of the solid electrolyte materials of Examples 2 to 12 were measured as in Example 1. Fig. 4 is a graph showing X-ray diffraction patterns of the solid electrolyte materials of Examples 2 to 12. The position of each peak with the highest intensity and value of the half value width within a diffraction angle 2Θ range of 27° or more and 36° or less are shown in Table 1.

(Charge and discharge test)

Batteries of Examples 2 to 12 were obtained as in Example 1 using the solid electrolyte materials of Examples 2 to 12.

The batteries of Examples 2 to 12 were subjected to the charge and discharge test as in Example 1. The batteries of Examples 2 to 12 were well charged and discharged as in Example 1.

<Comparative Examples 1 to 3>

(Production of solid electrolyte material)

In Comparative Examples 1 to 3, LiCl, YCl$_3$, and ScCl$_3$ were provided as raw material powders in a dry argon atmosphere at a LiCl : YCl$_3$ : ScCl$_3$ molar ratio of (6 - 3b) : (1 - a)b : ab. These raw material powders were milling-treated for 12 hours at 600 rpm using a planetary ball mill. Thus, solid electrolyte materials of Comparative Examples 1 to 3 were obtained. That is, in Comparative Examples 1 to 3, heat treatment was not performed.

(Evaluation of ion conductivity)

The ion conductivities of the solid electrolyte materials of Comparative Examples 1 to 3 were measured as in Example 1. The measurement results are shown in Table 1. The measurement results are shown in Table 1.

(X-ray diffraction measurement)

The X-ray diffraction patterns of the solid electrolyte materials of Comparative Examples 1 to 3 were measured as in Example 1. Fig. 4 is a graph showing X-ray diffraction patterns of the solid electrolyte materials of Comparative Examples 1 to 3. The position of each peak with the highest intensity and value of the half value width within a diffraction angle 2$\Theta$ range of 27° or more and 36° or less are shown in Table 1.

[Table 1]

| | Composition | a | b | Peak position (°) | Half value width (°) | Ion conductivity (S/cm) |
|---|---|---|---|---|---|---|
| Example 1 | L1$_3$Y$_{0.7}$Sc$_{0.3}$Cl$_6$ | 0.3 | 1 | 31.51 | 0.21 | $4.4 \times 10^{-4}$ |
| Example 2 | Li$_3$Y$_{0.65}$Sc$_{0.35}$Cl$_6$ | 0.35 | 1 | 29.51 | 0.22 | $7.2 \times 10^{-4}$ |
| Example 3 | Li$_3$Y$_{0.6}$Sc$_{0.4}$Cl$_6$ | 0.4 | 1 | 29.55 | 0.25 | $7.5 \times 10^{-4}$ |
| Example 4 | Li$_3$Y$_{0.5}$Sc$_{0.5}$Cl$_6$ | 0.5 | 1 | 29.64 | 0.21 | $7.5 \times 10^{-4}$ |
| Example 5 | Li$_3$Y$_{0.3}$Sc$_{0.7}$Cl$_6$ | 0.7 | 1 | 29.71 | 0.19 | $8.2 \times 10^{-4}$ |
| Example 6 | Li$_3$Y$_{0.1}$Sc$_{0.9}$Cl$_6$ | 0.9 | 1 | 29.77 | 0.17 | $1.3 \times 10^{-3}$ |
| Example 7 | Li$_3$ScCl$_6$ | 1 | 1 | 29.79 | 0.16 | $1.3 \times 10^{-3}$ |
| Example 8 | Li$_{2.85}$Sc$_{1.05}$Cl$_6$ | 1 | 1.05 | 29.81 | 0.17 | $1.2 \times 10^{-3}$ |
| Example 9 | Li$_{3.6}$(Y$_{0.1}$Sc$_{0.9}$)$_{0.8}$Cl$_6$ | 0.9 | 0.8 | 29.68 | 0.42 | $6.7 \times 10^{-4}$ |
| Example 10 | Li$_{3.3}$(Y$_{0.1}$Sc$_{0.9}$)$_{0.9}$Cl$_6$ | 0.9 | 0.9 | 29.85 | 0.18 | $8.8 \times 10^{-4}$ |
| Example 11 | Li$_{2.85}$(Y$_{0.1}$Sc$_{0.9}$)$_{1.05}$Cl$_6$ | 0.9 | 1.05 | 29.79 | 0.17 | $8.9 \times 10^{-4}$ |
| Example 12 | Li$_{2.7}$(Y$_{0.1}$Sc$_{0.9}$)$_{1.1}$Cl$_6$ | 0.9 | 1.1 | 29.80 | 0.15 | $9.2 \times 10^{-4}$ |
| Comparative Example 1 | Li$_3$Y$_{0.7}$Sc$_{0.3}$Cl$_6$ | 0.3 | 1 | 33.80 | 0.84 | $4.0 \times 10^{-4}$ |
| Comparative Example 2 | Li$_3$Y$_{0.5}$Sc$_{0.5}$Cl$_6$ | 0.5 | 1 | 34.02 | 0.83 | $3.3 \times 10^{-4}$ |
| Comparative Example 3 | Li$_3$Y$_{0.01}$Sc$_{0.99}$Cl$_6$ | 0.99 | 1 | 29.66 | 0.69 | $1.9 \times 10^{-4}$ |

(Consideration)

The solid electrolyte materials of Examples 1 to 12 have high ion conductivities of $4.4 \times 10^{-4}$ S/cm or more. In the X-ray diffraction patterns of the solid electrolyte materials of Examples 1 to 12, the half value width of each peak with the highest intensity within a diffraction angle 2Θ range of 27° or more and 36° or less is 0.5° or less. On the other hand, the half value widths of peaks of the solid electrolyte materials of Comparative Examples 1 to 3 corresponding to the above are each higher than 0.5°.

As obvious by comparing Examples 2 to 7 with Example 1, when the value of "a" is 0.35 or more and 1 or less, the solid electrolyte material has a higher ion conductivity. As obvious by comparing Examples 5 to 7 with Examples 2 to 4, when the value of "a" is 0.7 or more and 1 or less, the solid electrolyte material has a further higher ion conductivity. As obvious by comparing Examples 6 and 10 to 12 with Example 9, when the value of "b" is 0.9 or more and 1.1 or less, the solid electrolyte material has a more higher ion conductivity.

The batteries of Examples 1 to 12 were all charged and discharged at room temperature.

Since the solid electrolyte materials of Examples 1 to 12 do not contain sulfur, hydrogen sulfide is not generated.

As described above, the solid electrolyte material of the present disclosure has a high lithium ion conductivity without generating hydrogen sulfide and is suitable for providing a battery that can be well charged and discharged.

Industrial Applicability

The solid electrolyte material of the present disclosure is used in, for example, an all solid lithium ion secondary battery.

Reference Signs List

| | |
|---|---|
| 100 | solid electrolyte particle |
| 101 | powder of solid electrolyte material |
| 201 | positive electrode |
| 202 | electrolyte layer |
| 203 | negative electrode |
| 204 | positive electrode active material particle |
| 205 | negative electrode active material particle |
| 300 | compression molding dies |
| 301 | punch upper part |
| 302 | die |
| 303 | punch lower part |
| 1000 | battery |

**Claims**

1. A solid electrolyte material comprising Li, Sc, and Cl, wherein

   in an X-ray diffraction pattern of the solid electrolyte material obtained using Cu-Kα rays;
   there are at least two peaks in a diffraction angle $2\theta$ range of 27° or more and 36° or less; and
   a peak with the highest intensity within the diffraction angle $2\theta$ range of 27° or more and 36° or less has a half value width of 0.5° or less.

2. The solid electrolyte material according to claim 1, represented by a following composition formula (1):

$$\mathrm{Li_{6-3b}(Y_{1-a}Sc_a)_b Cl_6} \qquad (1)$$

   here, following two mathematical expressions:

$$0.3 \leq a \leq 1;$$

   and

$$0.7 \leq \text{b} \leq 1.2$$

are satisfied.

3. The solid electrolyte material according to claim 2, wherein
a mathematical expression: $0.35 \leq a \leq 1$ is satisfied.

4. The solid electrolyte material according to claim 3, wherein
a mathematical expression: $0.7 \leq a \leq 1$ is satisfied.

5. The solid electrolyte material according to any one of claims 2 to 4, wherein a mathematical expression: $0.9 \leq b \leq 1.2$ is satisfied.

6. The solid electrolyte material according to claim 1, wherein
the half value width is 0.15° or more and 0.42° or less.

7. A battery comprising:

a positive electrode;
a negative electrode; and
an electrolyte layer disposed between the positive electrode and the negative electrode, wherein
at least one selected from the group consisting of the positive electrode, the negative electrode, and the electrolyte layer contains the solid electrolyte material according to any one of claims 1 to 6.

# FIG. 1

# FIG. 2

# FIG. 3

# FIG. 4

FIG. 5

**INTERNATIONAL SEARCH REPORT**

| International application No. |
|---|
| PCT/JP2021/017618 |

A. CLASSIFICATION OF SUBJECT MATTER
H01M 4/62(2006.01)i; H01M 10/052(2010.01)i; H01M 10/0562(2010.01)i; H01B 1/06(2006.01)i; C01F 17/36(2020.01)i
FI: H01M10/0562; H01M10/052; H01M4/62 Z; H01B1/06 A; C01F17/36
According to International Patent Classification (IPC) or to both national classification and IPC

B. FIELDS SEARCHED

Minimum documentation searched (classification system followed by classification symbols)
H01M4/62; H01M10/052; H01M10/0562; H01B1/06; C01F17/36

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)
CAplus (STN); REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/135348 A1 (PANASONIC IP MANAGEMENT CO., LTD.) 11 July 2019 (2019-07-11) paragraphs [0012], [0017]-[0018], [0213], fig. 6A | 1-2, 5-7<br>3-4 |
| Y | WO 2019/135320 A1 (PANASONIC IP MANAGEMENT CO., LTD.) 11 July 2019 (2019-07-11) paragraphs [0131], [0133] | 3-4 |
| A | WANG, Shuo et al., "Lithium Chlorides and Bromides as Promising Solid-State Chemistries for Fast Ion Conductors with Good Electrochemical Stability", Angewandte Chemie International Edition, 11 June 2019, vol. 58, issue 24, 8039-8043, (DOI)https://doi.org/10.1002/anie.201901938, Issue Online: 03 June 2019 entire text, all drawings | 1-7 |

☒ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 July 2021 (09.07.2021) | 20 July 2021 (20.07.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2021/017618 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | CN 111146425 A (CHINA AUTOMOTIVE BATTERY RESEARCH INSTITUTE CO., LTD.) 12 May 2020 (2020-05-12) | 1-7 |

Form PCT/ISA/210 (continuation of second sheet) (January 2015)

<div align="center">

**INTERNATIONAL SEARCH REPORT**
Information on patent family members

</div>

| | International application No. |
|---|---|
| | PCT/JP2021/017618 |

| Patent Documents referred in the Report | Publication Date | Patent Family | Publication Date |
|---|---|---|---|
| WO 2019/135348 A1 | 11 Jul. 2019 | CN 111279432 A paragraphs [0030], [0035]–[0036], [0267]–[0268], fig. 6A | |
| WO 2019/135320 A1 | 11 Jul. 2019 | CN 111448619 A paragraphs [0163]– [0164], [0167] | |
| CN 111146425 A | 12 May 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019135320 A